Europäisches Patentamt

European Patent Office

Office européen des brevets

(19)

(11) Numéro de publication : **0 470 038 A1**

# (12) DEMANDE DE BREVET EUROPEEN

(21) Numéro de dépôt : **91500088.9**

(51) Int. Cl.⁵ : **A01K 11/00**

(22) Date de dépôt : **01.08.91**

(30) Priorité : **02.08.90 ES 9002102**

(43) Date de publication de la demande :
**05.02.92 Bulletin 92/06**

(84) Etats contractants désignés :
**AT BE CH DE DK FR GB GR IT LI LU NL SE**

(71) Demandeur : **Cisneros Calvo-Ferrandez, Carlos**
**Buenos Aires n. 50**
**E-08036 Barcelona (ES)**
Demandeur : **Cuatrecasas Albareda, Luis**
**Consell de Cent, 46**
**E-08014 Barcelona (ES)**
Demandeur : **Alegret Monill, José Antonio**
**La Rambla, 12**
**E-25650 Isona (Lleida) (ES)**

(72) Inventeur : **Cisneros Calvo-Ferrandez, Carlos**
**Buenos Aires n. 50**
**E-08036 Barcelona (ES)**
Inventeur : **Cuatrecasas Albareda, Luis**
**Consell de Cent, 46**
**E-08014 Barcelona (ES)**
Inventeur : **Alegret Monill, José Antonio**
**La Rambla, 12**
**E-25650 Isona (Lleida) (ES)**

(74) Mandataire : **Manresa Val, Manuel**
**Gerona n. 34**
**E-08010 Barcelona (ES)**

(54) **Un appareil pour le marquage de bétail.**

(57) Il comporte un corps en "U" (1) ayant une poignée (2), une détente (3) susceptible d'actionner une tige (6) qui à une de ses extrémités porte une pièce porte-signes (8) faisant face à une extrémité (9) du corps (1) qui a des fenêtres (11) de passage de ces signes (8) à un tampon (12) immergé dans un réservoir intérieur d'encre (13). En un premier temps, ces signes (8) sont rapprochés du tampon (12) pour les encrer ; en un deuxième temps, il est intercalé une partie de l'animal entre cet "U" et les signes (8) déjà encrés sont imprimés.

EP 0 470 038 A1

FIG.1

L'objet de l'invention concerne un appareil pour le marquage de bétail, bovin, ovin ou porcin qui fournit d'appréciables et importantes améliorations sur ce qui est actuellement connu, en se caractérisant par sa simplicité de construction et de fonctionnement, qui lui permet d'être livré à un prix de revient abordable. Quant au fonctionnement pratique sur l'animal, il faut noter qu'il ne lui produit aucune sensation douloureuse.

En fait, les dispositions légales édictent que ces animaux doivent porter une quelconque identification qui permettent d'en déduire la provenance. Et cela se fait avec des tatouages ou un marquage à une partie de l'animal. Ces pratiques ont été réalisées par des méthodes soit rudimentaires soit très sophistiquées, avec des appareils complexes et par suite anti-économiques et le plus souvent en appliquant une forte chaleur avec un cachet sur une partie de la bête, avec la douleur correspondante pour celle-ci. D'autres fois, cela se fait avec de l'encre, simplement avec un cachet mouillé à la main sur un tampon à part.

L'invention fait connaître un appareil destiné précisément au marquage ou tatouage du bétail, axé sur un dispositif à maniement semblable à un pistolet et qui fournit un marcage efficace de l'animal, concrètement sur l'oreille, et d'une façon indolore et simple. Pour rendre plus facile l'explication, il est joint à la présente description une feuille de dessins dans laquelle il a été représenté un cas pratique de mise en oeuvre, qui n'est cité qu'à titre d'exemple non limitatif du cadre de l'invention.

Dans ces dessins:

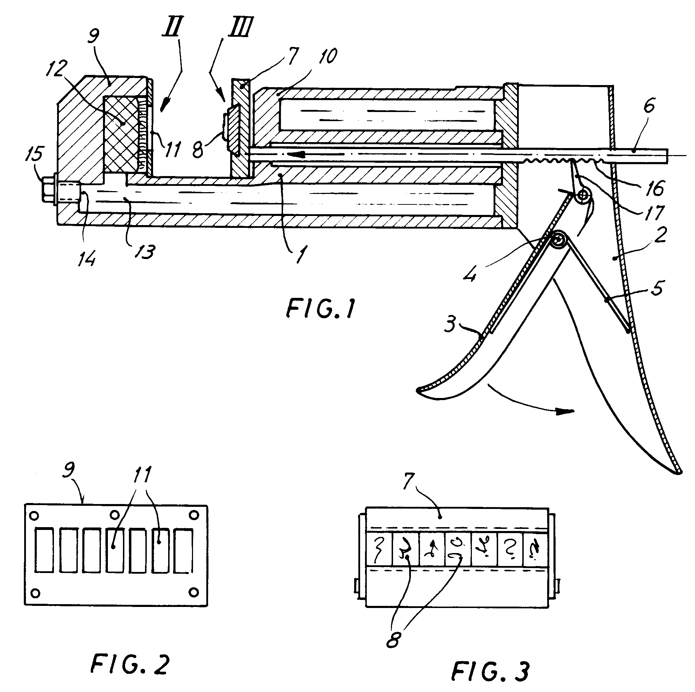

La figure 1 représente une vue en élévation à coupe longitudinale du présent appareil.

Et les fig. 2 et 3 illustrent des détails respectifs avant selon II et III de la fig. 1.

Selon ces figures, l'appareil pour le marquage du bétail, objet de l'invention, est constitué par un support général en "U" -1- monté au voisinage d'une poignée creuse -2- ayant une détente -3- susceptible, par l'articulation -4- et avec ploiement du ressort de rappel -5-, d'actionner une tige longitudinale -6- surmontée d'une pièce conventionnelle porte-signes -7-, soit des lettres soit des chiffres en relief -8-, vers une partie ou extrémité -9- du "U" qui fait face à la partie ou aile -10- dudit "U" par ou dépasse cette pièce porte-signes -7-.

Cette deuxième pièce -9- porte des fenêtres -11- faisant face à ces signes en relief -8- et contient une espèce de tampon -12- immergé dans un réservoir d'encre -13- qui est rempli à travers l'orifice -14- normalement fermé par le bouchon -15-.

Ce réservoir d'encre -13- s'étend à une grande partie de la pièce principale -1- qui est avantageusement creuse sauf une partie qui entoure la tige -6-. Cette tige -6- est partiellement dentée à mode de glissière -16- où est engrené le cliquet -17- relié à la détente -3-.

L'opération de marquage se fait avec cet ensemble en deux temps: un, d'encrage des chiffres ou lettres -8- de la pièce -7- en appuyant sur la détente -3- et en rapprochant ces signes des fenêtres -11- pour qu'à travers celles-ci ils soient encrés, en retournant après à la position initiale grâce au ressort de rappel -5-; dans un autre temps, il est intercalé la partie de l'animal à marquer, par exemple une oreille, entre les deux parties du support -9- et -10- en appuyant à nouveau sur la détente -5-, une action qui déterminera la marque sur cette partie de la bête.

L'invention dans son essentialité, peut être mise en oeuvre dans d'autres formes de réalisation quine change qu'en détail de celle indiquée uniquement à titre d'exemple, que la protection demandée couvrera également. On pourra donc fabriquer cet appareil pour le marquage du bétail, sous toutes formes et tailles, avec les moyens et les matériaux les plus appropriés, et avec les accessoires les plus convenables car tout cela est compris dans l'esprit des revendications suivantes.

**Revendications**

**1.-** Un appareil pour le marquage du bétail, caractérisé en ce qu'il est constitué par un corps principal de support en "U" (1) joint à une poignée (2) ayant une détente (3) susceptible d'actionner, de manière articulée et en ployant un ressort de rappel (5), une tige (6) guiée sur ce corps de support (1) et surmontée par une pièce porte-signes (7) tels que des lettres et/ou des chiffres en relief, faisant face à une extrémité (9) du propre support (1) avec des fenêtres (11) de passage de ces chiffres et/ou lettres (8) pour leur accès à un tampon (12), à l'intérieur de cette extrémité (9) immergé dans un réservoir d'encre (13) constitué dans le même corps principal (1) et remplissable à travers un orifice (14) ayant un bouchon de fermeture (15), de sorte qu'il permet de faire le marquage en deux temps: un, en appuyant sur la détente 3- et en rapprochant ces signes (8) desdites fenêtres (11) pour les encrer; l'autre, en intercalant une partie de l'animal susceptible de se loger entre les deux parties se faisant face (7,9), du support principal (1), tel qu'une oreille, et en appuyant à nouveau sur la détente (3) pour lui imprimer ces signes (8).

FIG.1

FIG.2

FIG.3

EP 0 470 038 A1

Office européen
des brevets

RAPPORT DE RECHERCHE EUROPEENNE

Numero de la demande

EP 91 50 0088

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 269 164 (STAALKAT B.V.) * colonne 5, ligne 57 - colonne 8, ligne 3; figures 1-4C * ----- | 1 | A 01 K 11/00 |
| | | | **DOMAINES TECHNIQUES RECHERCHES (Int. Cl.5)** |
| | | | A 01 K B 41 K |

Le présent rapport a été établi pour toutes les revendications

| Lieu de la recherche | Date d'achèvement de la recherche | Examinateur |
|---|---|---|
| BERLIN | 25-09-1991 | MARTIN DEL RIO A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)

5